# EUROPÄISCHE PATENTANMELDUNG

(11) **EP 1 475 144 A2**
(43) Veröffentlichungstag der Anmeldung: **10.11.2004**
(21) Anmeldenummer: 03014291.3
(22) Anmeldetag: 25.06.2003
(51) Int. Cl.: B01F 7/16, B01F 15/00, B01F 3/00

(54) **Stromstörer für einen Rührkessel, aufweisend mindestens ein Stromstörelement**

(30) Priorität: 09.05.2003 DE 20307282 U; 16.05.2003 DE 20307655 U
(71) Anmelder: Pfaudler Werke GmbH, 68723 Schwetzingen (DE)
(72) Erfinder: Reinemuth, Jürgen, Dr.-Ing., 69469 Weinheim (DE)
(74) Vertreter: Popp, Eugen, Dr.

(57) **Zusammenfassung**

Stromstörer für den Einsatz in einem Rührbehälter (10), insbesondere für die chemische und/oder pharmazeutische Industrie, mit einem Boden (70) umfassenden Unterkessel (10) sowie Deckel (45), durch den sich ein Rührer in das Behälterinnere (60) hinein erstreckt, wobei im Behälterinneren wenigstens ein sich vom Deckel (45) zum Boden (70) hin erstreckendes stabförmiges oder flächiges Stromstörelement (15) platziert ist, wobei das Stromstörelement (15) im Bereich zwischen Unterkessel (10) und Deckel (45) befestigt, insbesondere geklemmt, ist.

## Beschreibung

Die Erfindung betrifft einen Stromstörer für den Einsatz in einem Rührbehälter nach dem Oberbegriff des Patentanspruchs 1.

Stromstörer werden in Rührbehältern dazu verwendet, eine Vermischung von in dem Behälter befindlichen Inhaltsstoffen zu gewährleisten. Dies wird dadurch bewirkt, daß der Stromstörer eine Mitbewegung des Mediums mit etwa gleicher Geschwindigkeit wie der Rührer im Behälter verhindert. Der Stromstörer bewirkt eine Umwandlung von Tangential in Axialströmung.

In vielen bisher bekannten emaillierten Rührbehältern werden Stromstörer durch Stutzen am oberen Behälterboden bzw. Behälterdeckel eingebaut. Nachteilig bei dieser Befestigungsweise ist, daß zumindest ein Stutzen durch einen Stromstörer belegt ist und damit nicht mehr als Prözeßanschluß, z.B. für den Anschluß von Entnahmerohren od. dgl., verwendet werden kann. Alternativ dazu wurde auch schon vorgeschlagen, an der Wandung des Behälters Wandstauleisten anzubringen. Nachteilig ist die ungünstige Hinterströmbarkeit. Außerdem sind die Wandstauleisten fest mit der Behälterwandung verschweißt und deshalb bei einer Beschädigung nicht austauschbar.

Die Aufgabe der Erfindung besteht daher darin, einen Stromstörer zur Verfügung zu stellen, der ohne Verwendung von am oberen Behälterabschluß angeordneten Stutzen integrierbar ist.

Diese Aufgabe wird durch einen Stromstörer nach Patentanspruch 1 gelöst.

Insbesondere wird die Aufgabe durch einen Stromstörer für den Einsatz in einem Rührbehälter, insbesondere für die chemische und/oder pharmazeutische Industrie, mit einem einen Boden umfassenden Unterkessel sowie Deckel, durch den sich ein Rührer in das Behälterinnere hinein erstreckt, gelöst, wobei im Behälterinneren wenigstens ein sich vom Deckel zum Boden hin erstreckendes stabförmiges oder flächiges Stromstörelement plaziert ist und wobei das Stromstörelement im Bereich zwischen Unterkessel und Deckel befestigbar bzw. befestigt, insbesondere eingeklemmt, ist.

Hierdurch ergibt sich der erfindungswesentliche Vorteil, daß alle am oberen Behälterboden bzw. Deckel befindlichen Stutzen jederzeit als Prozeßanschluß dienen können, da diese bei der Verwendung einer erfindungsgemäßen Vorrichtung nicht mehr für die Anbringung von Stromstörern, wie bislang üblich, benötigt werden. Auf diese Weise ist es möglich, daß das stabförmige oder flächige Stromstörelement unabhängig von Anschlußstutzen des Behälters handhabbar und austauschbar ist.

Gemäß einer bevorzugten Ausführungsform der Erfindung ist jedem Stromstörelement eine sich beispielsweise etwa senkrecht, d.h. in einem Winkel von etwa 85° bis 95° zu seiner Längserstreckung erstreckender Halter bzw. eine Lasche zugeordnet, die entweder unmittelbar zwischen dem oberen Rand des Unterkessels und dem zugeordneten Umfangsrand des Deckels klemmbar ist, oder die Teil eines sich radial nach innen erstreckenden teil- oder vollringförmigen Befestigungselements ist, das zwischen dem oberen Rand des Unterkessels und dem zugeordneten Umfangsrand des Deckels klemmbar ist. Diese Lasche dient der Halterung des Stromstörelements.

Es sei an dieser Stelle vermerkt, daß die Stromstörelemente sich auch schräg in den Rührbehälter hineinerstrecken können. Eine Neigung nach innen oder außen ist ebenso denkbar wie ein "Verkippen in tangentialer Richtung".

Vorzugsweise sind die Befestigungslaschen für die Stromstörelemente im eingebauten Zustand geringfügig, beispielsweise um 3° bis 5° relativ zur Horizontalen nach unten geneigt, um ein Abfließen von Medium zu ermöglichen.

Mittels der oben genannten Lasche bzw. Befestigungselements ist eine Distanz des Stromstörelements von dem Befestigungselement und damit von der Umfangswand des Rührbehälters vorgebbar.

In vorteilhafter Weise läßt sich das Befestigungselement auf den oberen Rand des Unterkessels auflegen, bevor dieser mit dem Deckel verschlossen wird. Besonders bevorzugt ist die vollringförmige Ausbildung des Befestigungselements, da mit dieser vermieden wird, daß der Stromstörer versehentlich in den Unterkessel fällt. Darüber hinaus bietet die vollringförmige Ausführung den Vorteil einer sicheren Einbaumöglichkeit des Stromstörers zwischen zwei planebene Flansche, wobei eine gute Abdichtung gewährleistet wird.

Bei einer teilringförmigen Ausgestaltung des Befestigungselements kann dieses ein Halteelement, beispielsweise in Form eines Hakens, aufweisen, das verhindert, daß der Stromstörer in den Unterkessel kippt.

Gemäß einer weiteren Ausführungsform der Erfindung ist das Stromstörelement an der Unterseite des Deckels oder im oberen Bereich des Unterkessels anbringbar, insbesondere einhäng- oder einsteckbar. Bei dieser Variante sind entweder Hülsen oder Auflage- oder Aufnahmeeinheiten vorgesehen, in die entweder nur das Stromstörelement oder aber an diesem befestigte Bauteile, wie beispielsweise eine Lasche oder ein hakenförmiges Befestigungselement, an- oder eingreifen können. Beispielsweise kann der innere obere Umfangsrand des Unterkessels einen Vorsprung aufweisen, an dem das Befestigungselement aufhängbar ist.

Erfindungsgemäß ist das Stromstörelement fest mit der Lasche verbunden, beispielsweise vernietet oder verschraubt oder gemäß einer weiteren Ausführungsform der Erfindung einstückig, insbesondere verschweißt oder verlötet, ausgebildet.

Gemäß einer weiteren vorteilhaften Ausführungsform ist das Befestigungselement selbst als Dichtring ausgebildet. Vorzugsweise ist das Befestigungselement so ausgebildet, daß der Behälter druckdicht verschlossen werden kann. Das Befestigungselement wird durch die Klemmwirkung zwischen Unterkessel und Deckel so festgeklemmt, daß der Stromstörer ortsfest und verkippsicher fixiert ist. Zur Befestigung des Deckels auf dem Unterkessel können beispielsweise Klammerschrauben oder sonstige geeignete übliche VerschluBmechanismen gewählt werden.

Bei einer Ausführungsform können die Stromstörer, d.h. das ringförmige Befestigungselement, die Lasche(n) und die eigentlichen Stromstörelemente, je nach Reaktionszusammensetzung aus Kunststoff, vorzugsweise mit einer inerten Beschichtung, beispielsweise aus PTFE, hergestellt sein.

Üblicherweise ist als Material jedoch Stahl oder Edelstahl, im Falle aggressiver zu rührender Materialien in emaillierter Form, vorteilhaft. In diesem Fall ist zumindest das Stromstörelement und/oder die Lasche emailliert ausgeführt. Die Emaillierung besteht vorzugsweise aus einem hochkorrosionsfesten Überzug, der das Stromstörelement und nach Bedarf auch die Lasche vor korrosiven und/oder abrasiven Einflüssen schützt. Je nach Bedarf kann auch das Befestigungselement, an dem zumindest eine, vorzugsweise jedoch über den Umfang verteilt zwei, drei oder mehr Laschen mit zugeordneten stabförmigen oder flächigen Stromstörelementen angeordnet sind, mit einem derartigen hochkorrosionsbeständigen Überzug versehen sein. Die jeweilige Ausführungsform richtet sich hierbei in erster Linie nach den in dem Rührkessel befindlichen Materialien und deren chemisch-physikalischen Eigenschaften.

Gemäß einer weiteren Ausführungsform der Erfindung sind das Stromstörelement, die Lasche und das Befestigungselement einstückig ausgebildet, was aufgrund des Fehlens von lösbaren Verbindungsstellen zwischen einzelnen Bauteilen zusätzliche Stabilität gewährleistet.

Alternativ kann der Stromstörer mit dem Behälterdeckel einstückig ausgebildet sein. Diese Ausführungsform ist insbesondere bei großen Reaktoren und somit entsprechend großdimensionierten Stromstörern vorteilhaft, da diese dann zusammen mit dem Behälterdeckel auf das Reaktionsgefäß bzw. Rührgefäß abgesenkt werden können.

Gemäß einer anderen Ausführungsform der Erfindung kann der Stromstörer Mittel zur Erfassung vom Prozeßparametern aufweisen. In vorteilhafter Weise sind diese Mittel in das Stromstörelement des Stromstörers integriert oder an dieses an-, respektive aufgesetzt. Die meßtechnischen Elemente können hierbei auf ein oder alle Stromstörelemente, insbesondere Rohre, aufgebracht oder eingebaut werden. Auf diese Weise ist eine beispielsweise Temperaturmessung an einzelnen Punkten des Reaktorbehälters oder über das gesamte Reaktorvolumen möglich. Dies ist insbesondere deshalb sehr vorteilhaft, da die Temperaturmessung so einfach und direkt im Behälter erfolgt.

Erfindungsgemäß sind die Mittel zur Erfassung der vorgenannten Prozeßparameter, insbesondere für aggressive zu rührende Substanzen, in Email eingebettet oder in bevorzugter Weise in Email eingeschmolzen. Diese Ausführungsform eignet sich vor allem für Temperatursensoren.

Das stabförmig gestaltete Stromstörelement kann als Rohr, gegebenenfalls auch als flachgedrücktes Rohr, also jeweils hohl ausgebildet sein. Eine alternative, ggf. auch hohle, Ausführungsform eines im wesentlichen flächigen Stromstörelements ist ein Paddelstromstörer oder ein Stromstörelement in einer löffelartigen oder schaufelförmigen Gestalt. Vorzugsweise weist das Stromstörelement einen C- oder sichelförmigen Querschnitt auf. An dieser Stelle sei betont, daß prinzipiell alle, auch dreidimensionale Geometrien zur Optimierung der Vermischung des Gefäßinhalts möglich sind.

Ebenso ist die Oberflächenform des stabförmigen oder flächigen Profils nahezu beliebig wählbar. Diese kann für eine möglichst laminare Umströmung einerseits oder beispielsweise durch eine lochförmige Ausgestaltung, für die Verursachung von beispielsweise (Mikro-)verwirbelungen andererseits ausgelegt sein.

Des weiteren ist das Stromstörelement für die Zu- bzw. Abführung von Stoffen in und/oder aus dem Behälter geeignet. Hierfür ist das Stromstörelement hohl ausgebildet und weist Öffnungen auf, durch die ein Fluid in den Rührbehälter strömen oder aus diesem entfernt werden kann. Darüber hinaus weist bei dieser Ausführungsform die jeweilige Lasche, an der das Stromstörelement angeordnet ist, sowie das Befestigungselement entsprechende Zu- und/oder Abflußkanäle auf, die mit externen Rohr- oder Schlauchleitungen verbindbar sind.

Vorzugsweise weist das Befestigungselement zu diesem Zweck, sowie für die Anbringung von Sonden und Meßinstrumenten Anschlußstutzen auf.

In äußerst kostengünstiger Weise ist somit eine Doppelnutzung der erfindungsgemäßen Stromstörers für eine gleichzeitige Regelung und/oder Einstellung der Prozeßparameter möglich. Die entsprechenden Öffnungen in dem Stromstörelement sind nach Bedarf verschließbar.

Weitere Ausführungsformen der Erfindung ergeben sich aus den Unteransprüchen.

Nachfolgend wird die Erfindung anhand von zwei Ausführungsbeispielen beschrieben, die anhand der Abbildungen näher erläutert werden.

Hierbei zeigen:
- Fig. 1: eine erste Ausführungsform eines erfindungsgemäßen Stromstörers;
- Fig. 2: eine Schnittansicht einer zweiten Ausführungsform eines erfindungsgemäßen Stromstörers im Einbauzustand.

In der nachfolgenden Beschreibung werden für gleiche und gleichwirkende Teile dieselben Bezugsziffern verwendet.

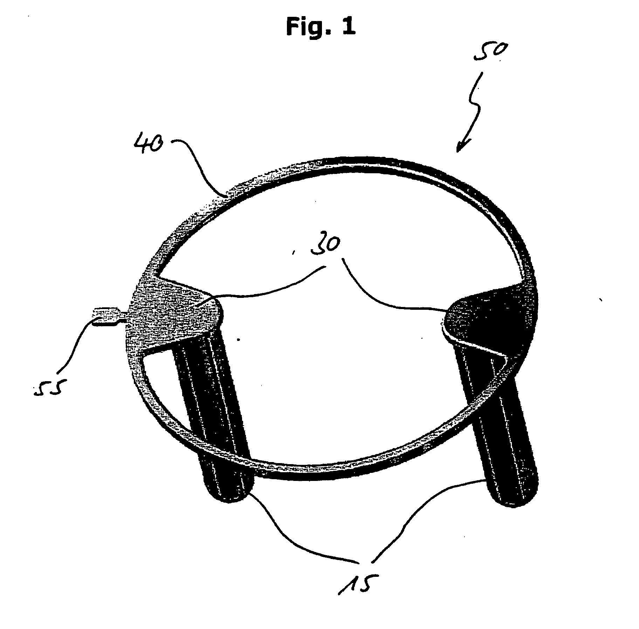

Fig. 1 zeigt eine erste Ausführungsform eines erfindungsgemäßen Stromstörers 50. Der Stromstörer 50 besteht aus zwei diametral an einer Lasche 30 befestigten paddelartigen Stromstörelementen 15, die ein flachgedrücktes stabförmiges Profil bilden. Die Laschen 30 sind jeweils integral mit einem Ring 40 verbunden. An dem Ring 40 ist ein radial nach außen vorstehender Anschluß 55 als Temperaturmeßstelle angeordnet. Der Ring 40 ist zwischen einem oberen Umfangsrand eines Unterkessels und dem Umfangsrand eines Behälterdeckels 45 fluiddicht einklemmbar. Der Ring 40 ist im wesentlichen so breit wie die Dichtflächen zwischen Unterkessel und Behälterdeckel. Die beiden Stromstörelemente 15 sind an den zugehörigen Laschen 30 angeschweißt. Sowohl die Stromstörelemente 15 als auch die Laschen 30 sind mit einem hochkorrosionsfesten Emailüberzug versehen. In dem in Fig. 1 linken Paddelstromstörelement 15 ist ein Thermosensor eingeschmolzen.

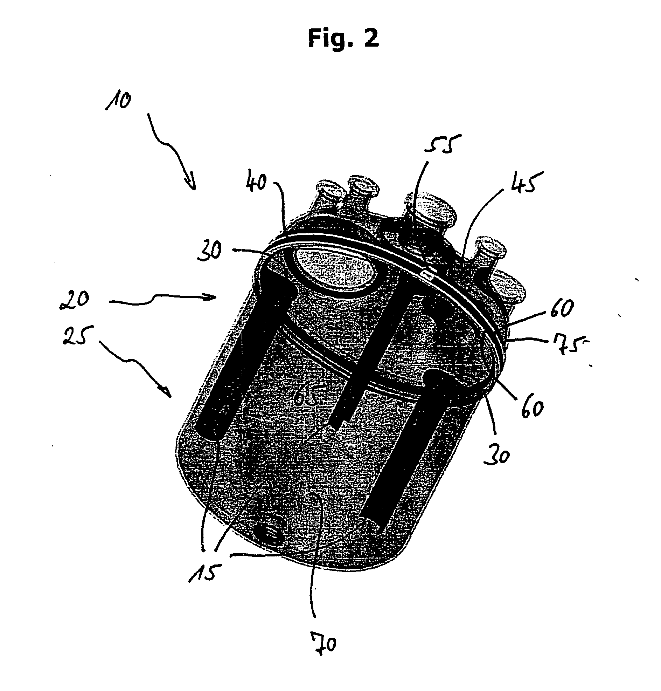

Fig. 2 zeigt eine perspektivische Teil-Schnittansicht einer zweiten Ausführungsform eines erfindungsgemäßen Stromstörers 50, der in einen zweiteiligen Rühr- oder Reaktions-Behälter 10, bestehend aus topfartigem Unterkessel 10 und Deckel 45 eingebaut ist. Der Stromstörer 50 besteht aus einem ringförmigen Bauteil 40, dessen Durchmesser dem Durchmesser des oberen Umfangsrandes des Behälters 10 und dem zugeordneten bzw. zugewandten Umfangsrand 75 des Deckels 45 angepaßt ist. Der Ring 40 ist mittels zweier Dichtungen 60 zwischen dem Behälterdeckel 45 und dem Rührbehälter 10, respektive Unterkessel 10 in klemmender Weise fixiert. An dem Ring 40 befinden sich gemäß Fig. 2 drei Laschen 30, an denen jeweils C-profilförmige Stromstörelemente 15 angeschweißt und vollständig emailliert sind. Die Stromstörelemente 15 erstrecken sich im Behälterinneren 65 aus dem oberen Behälterbereich 20 in den unteren Behälterbereich 25, d.h. in Richtung Behälterboden 70. Eine Fixierung am unteren Behälterboden ist nicht notwendig. Somit sind durch die Stromstörelemente 15 keine Behälterstutzen belegt, was insbesondere bei kleinvolumigen Behältern den maßgeblichen Vorteil hat, daß diese Stutzen nun, besser als beim Stand der Technik, anderweitig genutzt werden können. Eine Temperaturmeßstelle 55 ist an dem vollringförmigen Befestigungselement 40 angebracht.

Ein weiterer wesentlicher Vorteil des beschriebenen Stromstörers 50 liegt darin, daß er jederzeit in existierende zweiteilige Rührbehälter nachrüstbar ist und im Falle einer Beschädigung einfach ausgetauscht werden kann. Durch die jederzeit flexible Einbausituation kann der Stromstörer 50 zudem jederzeit optimal positioniert oder, je nach Ausführungsform, durch zusätzliche Stromstörelemente 15 ergänzt werden. Darüber hinaus sind die erfindungsgemäßen Stromstörelemente 15 wandnah, d.h. mit einem für eine Hinterströmung innerhalb des Behälters ausreichenden Abstand von der Behälterwand positionierbar.

An dieser Stelle sei darauf hingewiesen, daß alle oben beschriebenen Teile für sich allein gesehen und in jeder Kombination, insbesondere die in den Zeichnungen dargestellten Details als erfindungswesentlich beansprucht werden. Abänderungen hiervor sind dem Fachmann geläufig.

### Bezugszeichenliste

- 10: Rührbehälter
- 15: Stromstörelement
- 20: oberer Behälterbereich
- 25: unterer Behälterbereich
- 30: Lasche
- 35: oberer Behälterrand
- 40: Ring
- 45: Behälterdeckel
- 50: Stromstörer
- 55: Temperaturmeßstelle / Anschlußstutzen
- 60: Dichtmittel
- 65: Behälterinneres
- 70: Behälterboden
- 75: Umfangsrand des Deckels

## Patentansprüche

1. Stromstörer für den Einsatz in einem Rührbehälter (10), insbesondere für die chemische und/oder pharmazeutische Industrie, mit einem einen Boden (70) umfassenden Unterkessel (10) sowie Deckel (45), durch den sich ein Rührer in das Behälterinnere (60) hinein erstreckt, wobei im Behälterinneren wenigstens ein sich vom Deckel (45) zum Boden (70) hin erstreckendes stabförmiges oder flächiges Stromstörelement (15) plaziert ist,
**dadurch gekennzeichnet, daß**
das Stromstörelement (15) im Bereich zwischen Unterkessel (10) und Deckel (45) befestigt, insbesondere geklemmt, ist.

2. Stromstörer nach Anspruch 1,
**dadurch gekennzeichnet, daß**
jedem Stromstörelement (15) ein Halter bzw. eine Lasche (30) zugeordnet ist, die zwischen dem oberen Rand (35) des Unterkessels (10) und dem zugeordneten Umfangsrand (75) des Deckels (45) klemmbar ist oder die Teil eines sich radial nach innen erstreckenden teil- oder vollringförmigen Befestigungselements (40) ist, das zwischen dem oberen Rand (35) des Unterkessels (10) und dem zugeordneten Umfangsrand (75) des Deckels (45) klemmbar ist.

3. Stromstörer nach Anspruch 2,
**dadurch gekennzeichnet, daß**
die Lasche (30) in eingebauten Zustand bezüglich einer Horizontalen um einen Winkel von 3° bis 5° nach unten geneigt ist.

4. Stromstörer nach Anspruch 1,
**dadurch gekennzeichnet, daß**
das Stromstörelement (15) an der Unterseite des Deckels (45) oder im oberen Bereich (20) des Unterkessels (10) anbringbar, insbesondere einhäng- oder einsteckbar, ist.

5. Stromstörer nach Anspruch 3,
**dadurch gekennzeichnet, daß**
das Befestigungselement (40) als Dichtring ausgebildet ist.

6. Stromstörer nach einem der Ansprüche 3 oder 5,
**dadurch gekennzeichnet, daß**
das Befestigungselement (40) auf einer dem Behälter (10) und einer dem Behälterdeckel (45) zugewandten Seite, eine Struktur zum Ein- und/oder Ansatz eines Dichtmittels (60) aufweist.

7. Stromstörer nach einem der Ansprüche 3, 5 oder 6,
**dadurch gekennzeichnet, daß**
das Stromstörelement (15), die Lasche (30) und ggf. das Befestigungselement (40) einstückig. ausgebildet sind.

8. Stromstörer nach einem der Ansprüche 3 bis 7,
**dadurch gekennzeichnet, daß**
der Stromstörer (50) oder zumindest das Stromstörelement (15) einstückig mit dem Behälterdeckel (45) ausgebildet ist.

9. Stromstörer nach einem der Ansprüche 2 bis 8,
**dadurch gekennzeichnet, daß**
das Stromstörelement (15) und/oder die Lasche (30) und/oder das Befestigungselement (40) emailliert sind.

10. Stromstörer nach einem der vorhergehenden Ansprüche,
**dadurch gekennzeichnet, daß**
der Stromstörer (50), insbesondere das Stromstörelement (15), Mittel zur Erfassung von Prozeßparametern aufweist.

11. Stromstörer nach Anspruch 10,
**dadurch gekennzeichnet, daß**
die Mittel zur Erfassung von Prozeßparametern in Email eingebettet, insbesondere eingeschmolzen, sind.

12. Stromstörer nach einem der vorhergehenden Ansprüche,
**dadurch gekennzeichnet, daß**
zumindest das Stromstörelement (15) hohl ausgebildet ist und zur Positionierung von Mitteln zur Zu- bzw. Abfuhr von Prozeßstoffen dient.

13. Stromstörer nach einem der Ansprüche 2 bis 11,
**dadurch gekennzeichnet, daß**
das Befestigungselement Anschlußstutzen (55), insbesondere für Sonden und/oder eine Zu- bzw. Abführung von Stoffen aufweist.

14. Stromstörer nach einem der vorhergehenden Ansprüche,
**dadurch gekennzeichnet, daß**
die Oberfläche des Stromstörelements (15) mit Noppen, Rillen oder Verwirbelungsöffnungen versehen ist.
